(19) Europäisches Patentamt
European Patent Office
Office européen des brevets

(11) EP 3 560 614 A1

(12) **EUROPEAN PATENT APPLICATION**
published in accordance with Art. 153(4) EPC

(43) Date of publication:
**30.10.2019 Bulletin 2019/44**

(51) Int Cl.:
**B21B 15/00** (2006.01)      **B21B 45/02** (2006.01)
**B21B 39/00** (2006.01)      **B21B 38/00** (2006.01)

(21) Application number: **17882715.0**

(22) Date of filing: **22.12.2017**

(86) International application number:
**PCT/KR2017/015340**

(87) International publication number:
**WO 2018/117735 (28.06.2018 Gazette 2018/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **23.12.2016 KR 20160178291**

(71) Applicant: **Posco**
**Pohang-si, Gyeongsangbuk-do 37859 (KR)**

(72) Inventors:
• **LIM, Choong-Soo**
  **Gwangyang-si**
  **Jeollanam-do 57807 (KR)**
• **HUH, Hyeong-Jun**
  **Gwangyang-si**
  **Jeollanam-do 57807 (KR)**
• **KWAK, Sung-Joon**
  **Gwangyang-si**
  **Jeollanam-do 57807 (KR)**

(74) Representative: **Zech, Stefan Markus**
  **Meissner Bolte Patentanwälte**
  **Rechtsanwälte Partnerschaft mbB**
  **Postfach 86 06 24**
  **81633 München (DE)**

(54) **SIDE TRIMMING DEVICE**

(57)     A side trimming device according to an embodiment of the present invention may comprise: a cutting unit for mechanically cutting a transferred steel plate; a groove forming unit for forming a groove in a cutting-scheduled area in front of the cutting unit with reference to the steel plate transfer direction; and a washing unit arranged adjacent to the groove forming unit so as to suction molten material accumulating in the groove in the side direction of the steel plate.

【Figure 3】

# Description

[Technical Field]

The present disclosure relates to a side trimming device.

[Background Art]

A process of side-trimming of a steel plate (S) refers to a process of trimming side portions of a steel plate (S) before hot-rolling during a continuous cold-rolling process. The side trimming process may be performed to remove cracks and other defects on an edge portion of a hot-rolled plate, which may cause breakage during rolling.

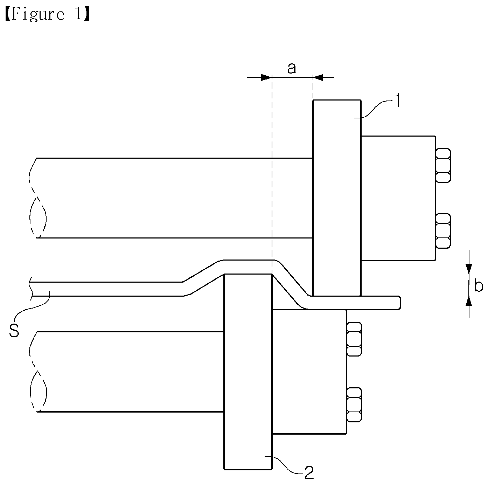

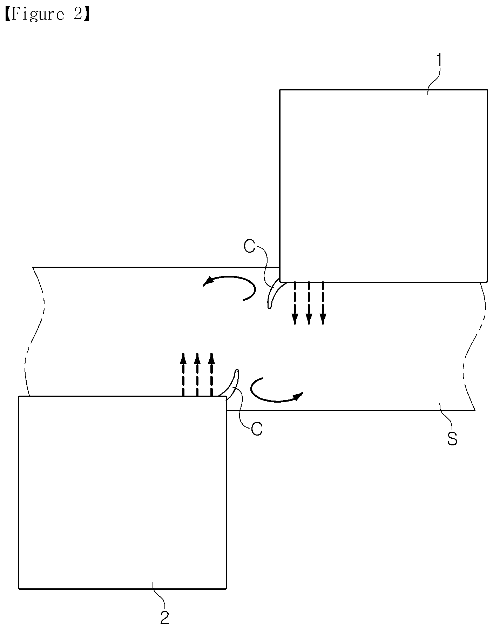

FIG. 1 illustrates a side trimming device having a general structure, and FIG. 2 illustrates a mechanism for side-trimming a steel plate using a side trimming device illustrated in FIG. 1.

As illustrated in FIG. 1, a side trimming device may be configured to include rotary knives (1, 2) disposed in an upper portion and a lower portion and cutting an edge portion of the steel plate (S). The rotary knives (1, 2) may have a disk form, and may be configured to rotate in accordance with transferring of the steel plate (S), and a horizontal clearance (a) and a vertical clearance (b) may be formed between the knife (1) disposed in an upper portion and the knife (1, 2) disposed in a lower portion. The horizontal clearance (a) may refer to a gap between the rotary knives (1, 2) spaced apart from each other in a horizontal direction, and the vertical clearance (b) may refer to a lap on which the rotary knives 1 and 2 overlap each other in a vertical direction. A certain amount of an edge portion of the steel plate (S) may be cut out while consecutively passing the rotary knives 1 and 2 having the horizontal and vertical clearances (a, b). The rotary knives (1, 2) may not have driving force itself, and may rotate by transferring force of the steel plate (S).

As illustrated in FIG. 2, an edge portion of the steel plate (S) may be cut out by shearing and tearing through the upper and lower knives (1, 2). Firstly, the rotary knives (1, 2) may shear-deform the steel plate (S) by the amount of a predetermined vertical clearance (b). Then, a crack (C) may be created on each of end portions of the shear-deformation, end portions at which the rotary knives (1, 2) dig into the steel plate (S), by rotating force of the rotary knives (1, 2). As the cracks (C) created on the end portions of the rotary knives (1, 2) grow and may meet each other in a center of a cut surface of the steel plate (S), edge portions may be cut out.

As described above, the side trimming of the steel plate (S) may be performed by a breakage mechanism following the shearing while a pair of the rotary knives (1, 2) apply pressure to upper and lower surfaces of the steel plate (S). When the steel plate (S) being transferred at a high speed is consecutively sheared using the mechanism, continuous pressure and mechanical impact may be applied to the edge portions of the rotary knives (1, 2) such that breakage may occur following wear. Thus, the rotary knives (1, 2) may be replaced after being used for a certain period of time, or may be reused after a grinding process.

Recently, in the field of a cold-rolling process, the production of advanced high strength steel (AHSS) has increased, and the development of a high strength steel plate (S) having improved strength has been continuously conducted. As strength of the steel plate (S) increases, load received in the rotary knives (1, 2) may also increase during a side trimming process, and the increase of load may inevitably cause wear and breakage of the rotary knives (1, 2). Due to the wear of the rotary knives (1, 2), defects such as cracks or burrs may be created on an edge portion of the steel plate (S), and a continuous process may need to be suspended to replace the rotary knives (1, 2) when wear or breakage of the rotary knives (1, 2) occurs, which may decrease in production speed.

To address the problems of wear and breakage of the rotary knives (1, 2) as described above, a side trimming process may be performed at a decreased speed of transferring the steel plate (S), but the decreased speed may decrease an overall production speed in a continuous process, which may thus not be a fundamental solution. Further, in the case of a high strength steel plate (S) having a certain level or higher of strength, the rotary knives (1, 2) may be easily broken such that a side trimming process may not be performed. Also, as another solution to prevent the breakage of the rotary knives (1, 2), strength of the rotary knives (1, 2) has been increased by changing a material of the rotary knives (1, 2), but there is a limitation in trimming high strength steel being transferred at a high speed.

[Disclosure]

[Technical Problem]

An aspect of the present disclosure is to provide a side trimming device which may form a groove by irradiating a laser to a portion scheduled to be cut and may accordingly decrease load on a cutting unit.

Also, an aspect of the present disclosure is to provide a side trimming device which may prevent contamination of a steel plate by spraying at least one of air or a gas to a portion scheduled to be cut through at least one spraying nozzle and suctioning a molten material created during processing of a groove.

Further, an aspect of the present disclosure is to provide a side trimming device which may maintain a constant distance between each of a focus of laser and at least one spraying nozzle, and a surface of a steel plate.

[Technical Solution]

According to an aspect of the present disclosure, a side trimming device includes a cutting unit cutting a transferred steel plate, a groove forming unit forming a groove in a portion scheduled to be cut in a front region of the cutting unit in a direction of transfer of the steel plate, and a washing unit disposed adjacent to the groove forming unit and suctioning a molten material accumulating in the groove.

According to an aspect of the present disclosure, a side trimming device includes a cutting unit cutting a transferred steel plate, a groove forming unit disposed in a front region of the cutting unit in a direction of transfer of the steel plate, and forming a groove in a portion scheduled to be cut by irradiating laser to the steel plate, and a distance maintaining unit maintaining a distance between a focus position of the laser and a surface of the steel plate by elastically altering a focus position of the laser in accordance with a height change of the surface of the steel plate.

According to an aspect of the present disclosure, a side trimming device includes a cutting unit cutting a transferred steel plate, a groove forming unit disposed in a front region of the cutting unit in a direction of transfer of the steel plate, and forming a groove in a portion scheduled to be cut by irradiating laser to the steel plate, a washing unit disposed adjacent to the groove forming unit, and including a least one spraying nozzle spraying at least one of air or a gas to a molten material accumulating in the groove to remove the molten material, and a distance maintaining unit maintaining a distance between a focus position of the laser and a surface of the steel plate and a distance between the at least one spraying nozzle and a surface of the steel plate by elastically altering a focus position of the laser and a position of the at least one spraying nozzle in accordance with a height change of the surface of the steel plate.

[Advantageous Effects]

According to an aspect of the present disclosure, load of a cutting unit may decrease, and contamination of a steel plate may be prevented. Also, by maintaining a constant distance between each of a focus of laser and at least one spraying nozzle, and a surface of a steel plate, efficiency in processing a groove and collecting a molten material may improve.

[Description of Drawings]

FIG. 1 is a diagram illustrating a side trimming device having a general structure;
FIG. 2 is a diagram illustrating a mechanism of side trimming of a steel plate using a side trimming device illustrated in FIG. 1;

FIG. 3 is a perspective diagram illustrating a side trimming device according to an example embodiment of the present disclosure; and
FIG. 4 is a cross-sectional diagram illustrating a side trimming device according to an example embodiment of the present disclosure.

[Best Mode for Invention]

The detailed descriptions of the present disclosure described below refer to attached drawings illustrating a certain example embodiment in which the present disclosure may be implemented. The example embodiment will be described in sufficient detail for a person having ordinary skill in the art to implement the present disclosure. Various example embodiments of the present disclosure may be different from one another but may not necessarily exclude one another. For example, certain forms, structures, and characteristics recited in the descriptions may be implemented in another example embodiment without departing from the spirit and scope of the present disclosure with respect to an example embodiment. Also, it should be understood that positions or dispositions of individual elements in each of the disclosed example embodiments may change without departing from the spirit and scope of the present disclosure. Thus, the detailed descriptions described below may not be provided in a limited sense, and the present disclosure may only be limited by attached claims along with an overall scope equivalent to matters claimed in the claims if described appropriately. Similar reference numerals in the drawings may indicate the same function or similar functions in various aspects.

In the description below, example embodiments of the present disclosure will be described in detail with reference to the attached drawings to allow a person having ordinary skill in the art to easily implement the present disclosure.

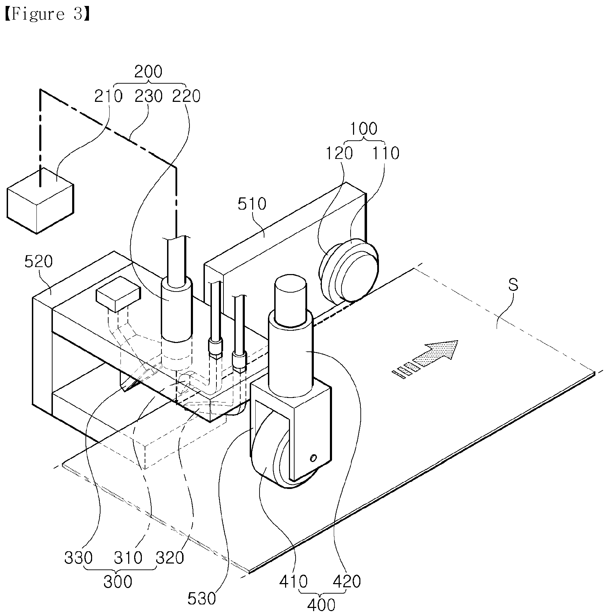

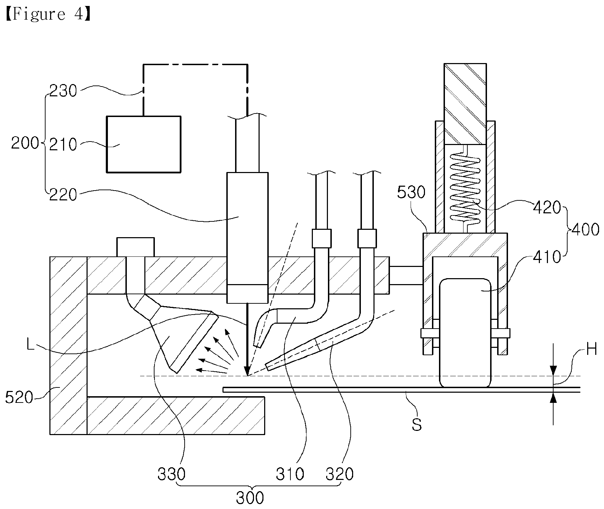

FIG. 3 is a perspective diagram illustrating a side trimming device according to an example embodiment of the present disclosure. FIG. 4 is a cross-sectional diagram illustrating a side trimming device according to an example embodiment of the present disclosure.

Referring to FIG. 3, a side trimming device may include a cutting unit (100), a groove forming unit (200), a washing unit (300), a distance maintaining unit (400), and a stand unit (500).

The stand unit (500) may include a plurality of stands (510, 520, 530), and the plurality of stands (510, 520, 530) may support the cutting unit (100), the groove forming unit (200), the washing unit (300), and the distance maintaining unit (400).

The cutting unit (100) may be installed in one portion of a transferred steel plate (S), and may trim sides of the steel plate (S) by mechanical cutting. The sides may be understood as edge regions of the steel plate (S) taken in a width direction, and the width direction of the steel plate (S) may intersect with a transfer direction of the steel plate (S), a direction perpendicular to the transfer direction.

The cutting unit (100) may include a cutting means (110) including a rotary knife. The cutting means (110) may be rotatably supported by a first stand (510), and the first stand (510) may be installed on the side of the steel plate (S). The cutting means (110) may have a disk form, and may be rotatably connected to the first stand (510) by a rotating shaft (120). The cutting means (110) may not have driving force itself, and may rotate by transferring force of the steel plate (S). The cutting means (110) may rotate by transferring force of the steel plate (S) and may cut the sides of the steel plate (S) by shearing and tearing.

The cutting means (110) may include a first cutting means disposed in an upper portion of the steel plate (S) and a second cutting means disposed in a lower portion of the steel plate (S), and the first cutting means and the second cutting means may apply shearing force to the sides of the steel plate (S). The first cutting means and the second cutting means may be disposed with a certain length of horizontal clearance and a certain length of vertical clearance formed therebetween.

The groove forming unit (200) may be installed in a front region of the cutting unit (100) in a transfer direction of the steel plate (S) . The groove forming unit (200) may form a groove in a portion scheduled to be cut of the steel plate (S) by irradiating a laser beam (L) to the portion scheduled to be cut before the steel plate (S) is transferred to the cutting unit (100) . By forming a groove in the portion scheduled to be cut, load of the cutting unit (100) may decrease, and a cutting process of the steel plate (S) may be accelerated.

The groove forming unit (200) may include a laser generator (210), a light collecting head (220), and a transmission line (230) . The laser generator (210) may generate a laser beam (L) . The laser generator (210) may include various types of laser generators such as a CW laser generator, a pulse laser generator, and the like, and may generate the laser beam (L) using various media such as a gas, a solid material, optical fiber laser, and the like. However, as short-wavelength laser may easily be absorbed to the steel plate (S), a preheating efficiency of the steel plate (S) may increase by using the laser beam (L) of a short-wavelength when processing high strength steel.

The light collecting head (220) may collect the laser beam (L) of the laser generator (210) to be focused on a precut portion. The collecting head (220) may be supported by a second stand (520), an optical system including one or more lenses may be provided in the light collecting head (220), and the light collecting head (220) may be connected to the laser generator (210) through the transmission line (230) such as an optical fiber, and the like.

The light collecting head (220) may be provided in an upper portion and a lower portion of the steel plate (S) to irradiate the laser beam (L) to upper and lower surfaces of the steel plate (S). The laser beam (L) generated from the laser generator (210) may pass through the transmission line (230) and the light collecting head (220) and may be irradiated to upper and lower surfaces of the steel plate (S). In the example embodiment of the present disclosure, the laser beam (L) may have sufficient energy density on a surface of the steel plate (S) by using the light collecting head (220), and accordingly, the light collecting head (220) may maintain a sufficient spaced distance from the steel plate (S) such that the optical system disposed on a final end of the light collecting head (220) may be prevented from being damaged by collision or heat in advance.

As the laser beam (L) has low light divergence properties, the laser beam (L) may be focused in a relatively small area in high density using a light refracting element such as the light collecting head (220). When the light focused in high density is incident to a surface of the steel plate (S), a portion of light energy may be absorbed by an object, and a temperature of the steel plate (S) may increase due to energy of the absorbed light. When the amount of the energy of absorbed light is sufficient, a portion irradiated with the light may be melted. Using the melting phenomenon by the light absorption, a groove may be formed in the steel plate (S).

The steel plate (S) may be cut using the laser beam (L), and when the steel plate (S) is cut using the laser beam (L), power density determined by strength of the laser beam (L) irradiated on the steel plate (S) and a moving speed of the steel plate (S) may need to be greater than a threshold value. For example, when the steel plate (S) having a thickness of 0.23mm is cut using the laser beam (L) of 2kW, a maximum cutting speed may be 100mpm. In a cold-rolling process, as a thickness of the steel plate (S) is 3 to 5mm and a maximum speed of transferring the steel plate (S) is 250mpm or higher, an output of the laser beam (L) for cutting the steel plate (S) may need to be several tens of kW. Thus, as there may be a limitation in implementing the side trimming process only using the laser beam (L), in the example embodiment, the groove forming unit (200) may be installed to be interlocked with the cutting unit (100).

Parameters indicating a shape and a size of a groove, a depth and a width, may vary depending on a distance between a surface of the steel plate (S) and a focus of later. As an example, when a laser focus is positioned at a distance determined from a surface of the steel plate (S), positioned below 4mm, for example, a depth of the groove may become maximum. When a depth of the groove is maximum, load of the cutting unit (100) may greatly decrease. Thus, to maximize a depth of the groove, it may be required to maintain an optimal distance between a surface of the steel plate (S) and the light collecting head (220).

The washing unit (300) may include a first spraying nozzle (310), a second spraying nozzle (320), and a suction unit (330). The first spraying nozzle (310), the second spraying nozzle (320), and the suction unit (330) may be fixed to and installed in a second stand (520).

The first spraying nozzle (310) may spray air or a gas to a portion of the steel plate (S) scheduled to be cut, to which the laser beam (L) is irradiated to form a groove and may discharge a molten material externally. When forming a groove by irradiating the laser beam (L), heating, melting, and vaporization phenomena may consecutively performed as the steel plate (S) absorbs light energy, and the molten material may be accumulated in the groove. As the molten material is accumulated in the groove, efficiency of the process of forming a groove may decrease. According to the example embodiment of the present disclosure, the molten material may be pushed aside externally from the groove using the first spraying nozzle (310), and accordingly, the laser beam (L) may not be blocked by the molten material but may reach an internal wall of the groove, thereby increasing a depth of the groove.

The first spraying nozzle (310) may spray at least one of air and a gas in a direction perpendicular to a surface of the steel plate (S) at a certain angle. The smaller the angle, it may be easier to discharge the molten material in a direction perpendicular to a surface of the steel plate (S). Thus, as an example, the first spraying nozzle (310) may spray air or a gas in a vertical direction and at an angle of 0° to 70°. The first spraying nozzle (310) may spray an inert gas which may not chemically react with the steel plate (S). For example, the inert gas may include air, nitrogen (N2), carbon dioxide (CO2), and argon (Ar).

The molten material generated during processing a groove by irradiating the laser beam (L) may have characteristics of a high scattering speed, and may have high kinetic energy in accordance with a high scattering speed. There may be a risk of contamination of a surface of the steel plate (S) by the molten material having high kinetic energy and scattered at various angles, and by the molten material scattered by a gas and air sprayed from the first spraying nozzle (310).

In the example embodiment of the present disclosure, the second spraying nozzle (320) may spray at least one of air or a gas to scatter the molten material to the side of the steel plate (S), and the suction unit (330) may be disposed on the side of the steel plate (S) and may absorb the molten material scattered by air and a gas sprayed from the second spraying nozzle (320) to the side. The suction unit (330) may form an air flow flowing towards the suction unit (330) from the outside by decreasing internal pressure.

The second spraying nozzle (320) may spray at least one of air and a gas to a portion scheduled to be cut in a direction perpendicular to a surface of the steel plate (S) at a certain angle. A spraying angle of the second spraying nozzle (320) may be smaller than a spraying angle of the first spraying nozzle (310) in the perpendicular direction. The greater the angle in a direction perpendicular to a surface of the steel plate (S), it may be easier to scatter the molten material. Thus, as an example, the second spraying nozzle (320) may spray air and a gas in the perpendicular direction at an angle of 20° to 90°. The second spraying nozzle (320) may spray an inert gas which may not chemically react with the steel plate (S). For example, the inert gas may include air, nitrogen (N2), carbon dioxide (CO2), and argon (Ar).

Accordingly, right after the molten material is separated from the groove, by providing gas pressure in a state in which the molten material is present in a relatively small area, the overall molten material may be collected through the suction unit (330).

To effectively collect the molten material scattered at a high speed with a wide angle distribution from an incident point of the laser beam (L) using the suction unit (330), a spraying target height (H) of each of the first spraying nozzle (310) and the second spraying nozzle (320) may need to be optimized. A section of the spraying target height (H) in which the molten material may be effectively absorbed may be represented as below. In Equation 1, DH1 and DH2 may be calculated experimentally.

$$[Equation\ 1]$$

$$DH1\ <\ H\ <\ DH2$$

Referring to Equation 1, to maintain the spraying target height (H) for effectively collecting the scattered molten material, the first spraying nozzle (310) and the second spraying nozzle (320) may need to secure a certain distance with a surface of the steel plate (S). To sum up, the light collecting head (220), the first spraying nozzle (310), and the second spraying nozzle (320) may need to maintain an optimal distance to a surface of the steel plate (S) at all times.

A cold-rolled steel plate (S) may be produced through processes of pickling and cold-rolling a hot-rolled steel plate (S). During the processes, sides of the cold-rolled steel plate (S) may be more rolled than the other portion such that the cold-rolled steel plate (S) may become uneven, and waves may be created on the sides. Particularly, in the case of high strength steel, it may be highly likely that waves may be created due to temperature and material deviations.

When a groove is formed on the side having waves using the groove forming unit (200), a distance between a surface of the steel plate (S) and the light collecting head (220), and a distance between the first spraying nozzle (310) and the second spraying nozzle (320) may change such that a depth of the formed groove may not be uniform, and an efficiency of collecting the scattered molten material may be unstable.

According to the example embodiment of the present disclosure, by altering a height of the second stand (520) supporting the light collecting head (220), the first spraying nozzle (310), and the second spraying nozzle (320) in accordance with a height of the side having waves, constant distances between a surface of the steel plate (S) and the light collecting head (220) and between the first spraying nozzle (310) and the second spraying nozzle (320) may be maintained.

To maintain a constant distance between a surface of the steel plate (S) and the light collecting head (220), and a constant distance between the first spraying nozzle (310) and the second spraying nozzle (320), a distance change of a surface of the steel plate (S) may be measured using a distance sensor, and the like, and a height of the second stand (520) may be controlled to be varied using a linear moving device reflecting the measured distance change. However, in the case of the control method, time may be consumed on a control calculation, a time delay may be accompanied when converting a control output into mechanical force, and load may rapidly occur in the linear moving device such that it may be difficult to apply the method to the steel plate (S) transferred at a high speed.

The side trimming device according to the example embodiment of the present disclosure may employ a distance maintaining unit (400) to maintain a constant distance between a surface of the steel plate (S) and the light collecting head (220), and a constant distance between the first spraying nozzle (310) and the second spraying nozzle (320) even when vibrations occur by a form change of the steel plate (S) transferred at a high speed.

The distance maintaining unit 400 may include a roller portion (410) and a downward force providing unit (420). The roller portion (410) and the downward force providing unit (420) may be fixed to a third stand (530), and the third stand (530) may be connected to the second stand (520).

The roller portion (410) may rotate while being in contact with a surface of the steel plate (S) by transferring force of the steel plate (S). A rotating shaft of the roller portion (410) may be fixed to the third stand (530) such that the roller portion (410) may be rotatably supported by the third stand (530).

The downward force providing unit (420) may provide downward force to the roller portion (410). As an example, the downward force providing unit (420) may include an elastic element, and may provide downward force, and the elastic element may include a spring. By the downward force provided from the downward force providing unit (420), the roller portion (410) may be closely in contact with a surface of the steel plate (S) and may rotate while being in close contact with a surface of the steel plate (S). Thus, a height of the roller portion (410), specifically a height of a rotating shaft of the roller portion (410), may change in accordance with a height change of the steel plate (S).

A height of the third stand (530) to which a rotating shaft of the roller portion (410) is fixed may be adjusted by a height change of the roller portion (410), and a height of the second stand (520) connected to the third stand (530) may also be adjusted by a height change of the roller portion (410) .

When the steel plate (S) having waves is transferred, a constant height of each of the light collecting head (220), the first spraying nozzle (310), the second spraying nozzle (320), and the steel plate (S) may be maintained by a determined distance, and an efficiency in forming a groove and an efficiency of collecting the molten material may be stably secured.

The present disclosure has been described by certain matters such as specific elements and limited example embodiments and drawings. However, they are provided to help understanding of the present disclosure, and the present disclosure is not limited to the aforementioned example embodiments, and it will be apparent that those skilled in the art can make modifications and variations based on the descriptions. Thus, the present disclosure will not be limited to the aforementioned example embodiments, and appended claims presented below, and equivalents or equivalent modifications of the appended claims may also be included in the scope of the present disclosure.

**Claims**

1. A side trimming device, comprising:

   a cutting unit cutting a transferred steel plate;
   a groove forming unit forming a groove in a portion scheduled to be cut in a front region of the cutting unit in a direction of transfer of the steel plate; and
   a washing unit disposed adjacent to the groove forming unit and suctioning a molten material accumulating in the groove.

2. The side trimming device of claim 1, wherein the washing unit comprises a first spraying nozzle discharging a molten material accumulating in the groove by spraying at least one of air or a gas to the portion scheduled to be cut.

3. The side trimming device of claim 2, wherein the washing unit further comprises a second spraying nozzle scattering the discharged molten material to a side of the steel plate by spraying at least one of air or a gas to the portion scheduled to be cut.

4. The side trimming device of claim 3, wherein a spraying angle of the first spraying nozzle is greater than a spraying angle of the second spraying nozzle in a direction perpendicular to a surface of the steel plate.

5. The side trimming device of claim 2, wherein a spraying angle of the first spraying nozzle is 0° to 70° in a direction perpendicular to a surface of the steel plate.

**6.** The side trimming device of claim 3, wherein a spraying angle of the second spraying nozzle is 20° to 90° in a direction perpendicular to a surface of the steel plate.

**7.** The side trimming device of claim 3, wherein the washing unit further comprises a suction unit disposed on a side of the steel plate and suctioning the molten material scattered to a side of the steel plate.

**8.** A side trimming device, comprising:

a cutting unit cutting a transferred steel plate; a groove forming unit disposed in a front region of the cutting unit in a direction of transfer of the steel plate, and forming a groove in a portion scheduled to be cut by irradiating laser to the steel plate; and a distance maintaining unit maintaining a distance between a focus position of the laser and a surface of the steel plate by elastically altering a focus position of the laser in accordance with a height change of the surface of the steel plate.

**9.** The side trimming device of claim 8, wherein the distance maintaining unit elastically adjusts a position of the groove forming unit in accordance with a height change of the surface of the steel plate.

**10.** The side trimming device of claim 9, wherein the distance maintaining unit comprises:

a roller portion rotating while being in contact with the surface of the steel plate by transferring force of the steel plate; and a downward force providing unit providing downward force to the roller portion.

**11.** The side trimming device of claim 10, wherein the downward force providing unit comprises an elastic element to provide elastic downward force to the roller portion.

**12.** The side trimming device of claim 11, wherein a rotating shaft of the roller portion changes in accordance with a height change of the surface of the steel plate by the elastic downward force.

**13.** The side trimming device of claim 12, wherein a stand to which the rotating shaft is fixed is connected to a stand to which the groove forming unit is fixed.

**14.** The side trimming device of claim 8, further comprising:
a washing unit disposed adjacent to the groove forming unit, and including a least one spraying nozzle spraying at least one of air or a gas to a molten material accumulating in the groove to remove the molten material.

**15.** The side trimming device of claim 14, wherein the distance maintaining unit maintains a distance between the at least one spraying nozzle and a surface of the steel plate by elastically altering a position of the at least one spraying nozzle in accordance with a height change of the surface of the steel plate.

**16.** The side trimming device of claim 15, wherein the distance maintaining unit comprises:

a roller portion rotating while being in contact with a surface of the steel plate by transferring force of the steel plate; and a downward force providing unit providing downward force to the roller portion.

**17.** The side trimming device of claim 16, wherein the downward force providing unit includes an elastic element to provide elastic downward force to the roller portion.

**18.** The side trimming device of claim 17, wherein a rotating shaft of the roller portion changes in accordance with a height change of a surface of the steel plate by the elastic downward force.

**19.** The side trimming device of claim 17, wherein a stand to which the rotating shaft is fixed is connected to a stand to which the washing unit is fixed.

【Figure 1】

【Figure 2】

【Figure 3】

【Figure 4】

# EP 3 560 614 A1

## INTERNATIONAL SEARCH REPORT

<table>
<tr><td colspan="2"></td><td>International application No.</td></tr>
<tr><td colspan="2"></td><td>PCT/KR2017/015340</td></tr>
</table>

**A. CLASSIFICATION OF SUBJECT MATTER**

*B21B 15/00(2006.01)i, B21B 45/02(2006.01)i, B21B 39/00(2006.01)i, B21B 38/00(2006.01)i*

According to International Patent Classification (IPC) or to both national classification and IPC

**B. FIELDS SEARCHED**

Minimum documentation searched (classification system followed by classification symbols)
B21B 15/00; B23K 26/064; B23K 26/02; B23K 26/14; B23K 26/38; B21D 1/05; B21B 37/68; B21B 1/26; B21B 45/02; B21B 39/00; B21B 38/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: steel sheet, cutting unit, groove forming unit, cleaning unit, distance-maintaining unit, side trimming device

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0071169 A (POSCO) 26 June 2015<br>See paragraphs [0023]-[0034]; claim 1; and figures 3-4. | 1-19 |
| Y | KR 10-1628326 B1 (NS CO., LTD.) 08 June 2016<br>See paragraph [0049]; and figure 2. | 1-7 |
| Y | KR 10-2013-0046598 A (HYUNDAI STEEL COMPANY) 08 May 2013<br>See paragraphs [0044]-[0071]; and figure 1. | 8-19 |
| A | KR 10-2010-0107814 A (HYUNDAI STEEL COMPANY) 06 October 2010<br>See paragraphs [0029]-[0117]; and figures 1-10. | 1-19 |
| A | JP 10-323791 A (NIPPON STEEL CORP.) 08 December 1998<br>See paragraphs [0011]-[0018]; and figures 1-10. | 1-19 |

☐ Further documents are listed in the continuation of Box C.  ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 23 APRIL 2018 (23.04.2018) | **23 APRIL 2018 (23.04.2018)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2017/015340**

| Patent document cited in search report | Publication date | Patent family member | Publication date |
|---|---|---|---|
| KR 10-2015-0071169 A | 26/06/2015 | CN 105828965 A | 03/08/2016 |
| | | EP 3085465 A1 | 26/10/2016 |
| | | EP 3085465 A4 | 25/01/2017 |
| | | JP 2017-503659 A | 02/02/2017 |
| | | JP 6272490 B2 | 31/01/2018 |
| | | KR 10-1655320 B1 | 07/09/2016 |
| | | KR 10-2015-0073565 A | 01/07/2015 |
| | | US 2016-0318121 A1 | 03/11/2016 |
| | | WO 2015-093675 A1 | 25/06/2015 |
| KR 10-1628326 B1 | 08/06/2016 | NONE | |
| KR 10-2013-0046598 A | 08/05/2013 | KR 10-1344333 B1 | 23/12/2013 |
| KR 10-2010-0107814 A | 06/10/2010 | NONE | |
| JP 10-323791 A | 08/12/1998 | AU 6518498 A | 22/10/1998 |
| | | AU 734139 B2 | 07/06/2001 |
| | | EP 1013372 A1 | 28/06/2000 |
| | | EP 1013372 A4 | 23/01/2008 |
| | | EP 2263821 A2 | 22/12/2010 |
| | | EP 2263821 A3 | 19/11/2014 |
| | | EP 2263822 A2 | 22/12/2010 |
| | | EP 2263822 A3 | 01/10/2014 |
| | | EP 2269762 A2 | 05/01/2011 |
| | | EP 2269762 A3 | 01/10/2014 |
| | | EP 2277656 A2 | 26/01/2011 |
| | | EP 2277656 A3 | 01/10/2014 |
| | | JP 10-263862 A | 06/10/1998 |
| | | JP 10-263863 A | 06/10/1998 |
| | | JP 10-272584 A | 13/10/1998 |
| | | JP 3635199 B2 | 06/04/2005 |
| | | KR 10-0375544 B1 | 10/03/2003 |
| | | KR 10-2001-0005796 A | 15/01/2001 |
| | | US 2003-0038120 A1 | 27/02/2003 |
| | | US 6770840 B2 | 03/08/2004 |
| | | WO 98-43775 A1 | 08/10/1998 |

Form PCT/ISA/210 (patent family annex) (January 2015)